# FASCICULE DE BREVET EUROPEEN

(11) **EP 3 072 208 B1**
(45) Date de publication et mention de la délivrance du brevet: **10.01.2018**
(21) Numéro de dépôt: 14809923.7
(22) Date de dépôt: 14.11.2014
(51) Int. Cl.: H02J 7/00

(54) **EQUILIBRAGE D'UNE BATTERIE A DEUX BRANCHES AVEC MISE EN PARALLELE DE NOMBRES DIFFERENTIELS D'ELEMENTS DE STOCKAGE**
LADUNGAUSGLEICH EINER ZWEI-STRÄNGEN BATTERIE DURCH DIE PARALLELSCHALTUNGVON AKKUMULATOR-ZELLEN AUS VERSCHIEDIENEN RANGEN
EQUALIZING OF A TWO-ROW BATTERY WITH THE SETTING IN PARALLEL OF CELLS OF DIFFERENT ORDER WITHIN THE ROW

(30) Priorité: 21.11.2013 FR 1361457
(43) Date de publication de la demande: 28.09.2016
(73) Titulaire: Renault S.A.S., 92100 Boulogne-Billancourt (FR)
(72) Inventeur: GAGNEUR, Laurent, 69006 Lyon (FR); DRIEMEYER-FRANCO, Ana-Lucia, F-78180 Montigny le Bretonneux (FR); FORGEZ, Christophe, F-60200 Compiegne (FR)
(86) Numéro de dépôt international: PCT/FR2014/052906
(87) Numéro de publication internationale: WO 2015/075358

(56) Documents cités:
- DE-A1-102011 054 790
- JP-A- 2008 117 573

## Description

### Domaine technique de l'invention

L'invention concerne le domaine de l'équilibrage en tension des éléments d'une batterie de stockage d'énergie électrique à au moins deux branches parallèles.

Plus précisément, elle concerne un procédé et un dispositif de gestion d'une batterie de stockage d'énergie électrique comportant au moins des première et deuxième branches connectées électriquement en parallèle et ayant chacune N éléments de stockage connectés électriquement en série.

### État de la technique

Les batteries utilisées dans les véhicules électriques, par exemple de type Lithium-Ion, sont constituées par un ensemble d'éléments de stockage, par exemple des cellules électrochimiques, qui sont assemblés en série pour atteindre le niveau de tension demandé par l'application. D'autre part, pour atteindre un niveau de capacité demandé par l'application, une batterie peut comprendre un montage en parallèle des éléments de stockage. C'est pourquoi il arrive fréquemment qu'une batterie de stockage d'énergie électrique comprenne une pluralité de branches connectées électriquement entre elles dans un montage en parallèle et comportant chacune une pluralité d'éléments de stockage connectés électriquement entre eux dans un montage en série. Le nombre de branches dépend de la capacité recherchée. Le nombre d'éléments associés en série le long de chaque branche dépend quant à lui de la tension recherchée.

Les processus de fabrication existants aujourd'hui ne permettent pas d'obtenir des éléments de stockage parfaitement identiques, notamment pour des caractéristiques comme leur capacité et leur résistance interne. De plus, ces éléments subissent, pendant la durée de vie de la batterie, des variations de température différentes dues à leur emplacement dans la batterie, ce qui les fait vieillir de façon hétérogène. Lorsque ces éléments présentant des caractéristiques différentes sont traversés par un même courant, ils sont en déséquilibre, en ce sens que leurs états de charge sont différents.

Des dispositifs de gestion de batterie sont connus pour corriger de tels déséquilibres, afin de permettre l'utilisation optimale de l'énergie contenue dans la batterie (la plage d'utilisation étant déterminée par les éléments respectivement le plus chargé et le moins chargé). L'équilibrage peut se faire à partir de l'information de l'état de charge des éléments (appelé « SOC » par la suite, pour « State Of Charge » en terminologie anglo-saxonne) ou de leur tension ou de leur tension à vide.

Les méthodes d'équilibrage utilisées actuellement sont actives ou passives :
- l'équilibrage passif (ou dissipatif) décharge les éléments de stockage les plus chargés dans des éléments dissipatifs (des résistances) afin qu'ils aient tous le même état de charge;
- l'équilibrage actif (ou non-dissipatif) transfère l'énergie des éléments les plus chargés vers ceux le plus déchargés, afin de converger vers un même état de charge.

Aujourd'hui, les systèmes d'équilibrage dits passifs visent à dissiper l'énergie des cellules les plus chargées dans des résistances afin qu'elles ne limitent pas la charge de l'ensemble des éléments de la batterie : de l'énergie est donc perdue. L'utilisation de cette technique lors de la décharge de la batterie induit une diminution de la tension de la batterie, ce qui entraine une augmentation du courant nécessaire pour que la batterie délivre une puissance donnée et ne permet pas l'augmentation de l'autonomie.

Au contraire, l'équilibrage dit actif, vise à répartir l'énergie des cellules les plus chargées vers les cellules qui le sont moins et permet de gagner en autonomie. Les circuits d'équilibrage actifs sont relativement complexes et utilisent en générale des moyens de transfert d'énergie tel que des transformateurs. Ces chaines de transfert d'énergie ont des rendements de conversion non unitaire.

L'invention concerne le domaine de l'équilibrage non-dissipatif.

Une solution d'équilibrage est connue du document EP1869748B1 qui décrit le principe de mettre en parallèle la pluralité de cellules contenues dans chacun des modules de la batterie, puis la mise en parallèle de tous les modules. Mais cette solution est peu flexible car tous les modules et cellules sont équilibrés indépendamment des besoins propres de chacune des cellules. Un inconvénient majeur supplémentaire de cette solution est qu'elle ne peut être mise en oeuvre que dans le cas où la batterie n'est pas utilisée, c'est-à-dire uniquement lorsqu'elle est en mode déconnectée et qu'elle n'est ni en cours de charge ni en cours de décharge, ceci étant dû au fait que les connexions et les déconnexions entraînent de brusques variations de la tension aux bornes de la batterie. Le document EP2363935A1 décrit une structure de commutation où chaque étage est équipé de trois commutateurs. Le système d'équilibrage associe en parallèle durant une première période un élément de stockage d'ordre n d'une branche avec un élément de stockage d'ordre n d'une autre branche. Puis le système d'équilibrage associe en parallèle durant une deuxième période un élément de stockage d'ordre n de la branche principale avec un élément de stockage d'ordre n-1 de la branche secondaire. Puis, le système d'équilibrage associe en parallèle durant une troisième période un élément de stockage d'ordre n de la branche principale avec un élément de stockage d'ordre n+1 de la branche secondaire. Quelle que soit la période, la mise en parallèle ne concerne qu'un étage de la branche principale vis-à-vis d'un seul autre de la branche secondaire. Les courants d'équilibrage sont limités ce qui ne donne pas entière satisfaction. D'autre part, à chaque période, chaque étage de la branche principale est connecté en parallèle avec un étage de la branche secondaire, de sorte que la solution d'équilibrage manque de souplesse de mise en oeuvre et d'adaptation aux besoins réels et spécifiques aux différents éléments de stockage des branches.

Un procédé de gestion d'une batterie de stockage ainsi qu'un dispositif correspondant sont également connus du document JP-A-2008117573.

### Objet de l'invention

Le but de la présente invention est de proposer une stratégie de gestion d'une batterie qui remédie aux inconvénients listés ci-dessus.
Un premier objet est notamment d'être capable d'équilibrer une batterie de façon non-dissipative, c'est-à-dire, par transfert de charge.

Un deuxième objet est de fournir une solution plus simple et à un coût plus faible que les solutions actuelles de la classe « équilibrage non-dissipatif ».
Un troisième objet est de fournir une solution flexible permettant le transfert d'énergie entre n'importe quels éléments de la batterie, que la batterie soit en utilisation ou non.
Un quatrième objet est de fournir une solution qui confère une faible durée d'équilibrage et qui améliore l'adaptation aux besoins réels des éléments de stockage considérés séparément. Ces objets sont atteints par un procédé de gestion d'une batterie de stockage d'énergie électrique selon la revendication 1, ainsi que par un dispositif de gestion d'une telle batterie selon la revendication 11.

### Description sommaire des dessins

D'autres avantages et caractéristiques ressortiront plus clairement de la description qui va suivre de modes particuliers de réalisation de l'invention donnés à titre d'exemples non limitatifs et représentés sur les dessins annexés, dans lesquels :
- la figure 1 représente la structure électrique d'une première batterie de stockage pour laquelle le procédé de gestion selon l'invention peut être appliqué via un exemple de dispositif de gestion selon l'invention,
- la figure 2 est une variante de la figure 1 à six éléments de stockage,
- la figure 3 représente le dispositif de la figure 2 après un premier exemple de pilotage des éléments de commutation préalablement sélectionnés,
- la figure 4 représente le dispositif de la figure 2 après un deuxième exemple de pilotage des éléments de commutation préalablement sélectionnés,
- la figure 5 est une variante de la figure 1 à quatre éléments de stockage,
- les figures 6 à 8 représentent le dispositif de la figure 5 durant trois périodes différentes au cours desquelles les commandes des éléments de commutation sont différentes.

### Description de modes préférentiels de l'invention

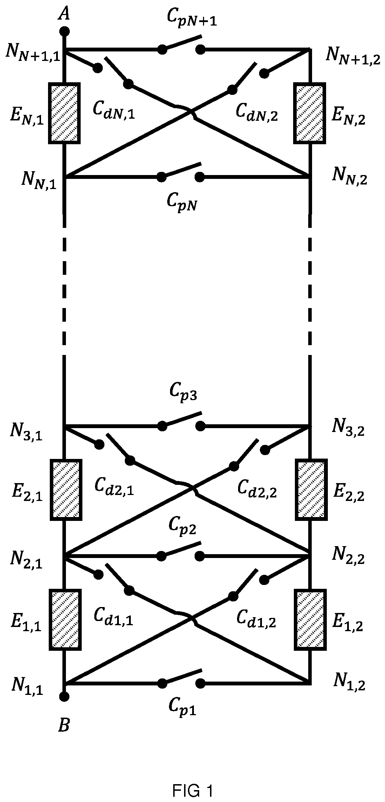

La figure 1 représente d'une part la structure électrique d'une batterie de stockage pour laquelle le procédé de gestion détaillé plus loin peut être appliqué et d'autre part une partie d'un dispositif de gestion qui met en oeuvre ce procédé.

Ainsi, la batterie de stockage d'énergie électrique comprend au moins des première et deuxième branches connectées électriquement en parallèle et ayant chacune N éléments de stockage connectés électriquement en série entre eux au sein d'une même branche.

Plus précisément, chaque branche comprend une pluralité d'éléments de stockage E_{i,j} (ici i variant entre 1 et N car chaque branche comprend N éléments de stockage montés en série et j variant entre 1 et 2 car la batterie comprend deux branches) connectés électriquement entre eux dans un montage en série le long de chaque branche. Il va de soi que le nombre m de branches montées en parallèle peut être différent de 2.

De la borne A vers la borne B de la batterie, les éléments de stockage E_{i,j} sont ainsi implantés le long de leur branche respective de manière ordonnée à des emplacements ayant un rang i donné. Un élément E_{i,j} est donc implanté à un emplacement de rang i le long de la branche j. Deux éléments de stockage de même rang au sein des deux branches forment ce qui est appelé un « étage ». La batterie, en sus des éléments de stockage E_{i,j}, comprend la structure électrique qui assure un tel montage des éléments entre eux et des branches entre elles. Cette structure comprend notamment des liaisons électriques directes reliant, deux à deux, deux éléments de stockage adjacents d'une même branche et la connexions des branches entre elles.

Les tensions à vide des éléments de stockage E_{i,j} sont assez faibles, de l'ordre de quelques Volts. Ainsi, pour atteindre la tension nominale de fonctionnement d'un circuit électrique alimenté par la batterie, il est nécessaire de mettre en série un certain nombre d'éléments de stockage électrochimique, définissant le nombre N. Un autre critère de conception de la batterie correspond à l'autonomie qu'elle permet d'obtenir, définie par la capacité des éléments de stockage. La mise en parallèle de deux éléments de stockage de même type permet par exemple de doubler la capacité de stockage. Ainsi, le nombre m de branches permet de définir la capacité globale de la batterie.

Chaque élément de stockage E_{i,j} de la batterie est constitué dans la suite de la description par soit une supercapacité, soit une cellule unitaire électrochimique, soit un organe à au moins une paire de telles cellules montées en parallèle électriquement, soit un module comprenant au moins deux tels organes montés en série électriquement entre eux, soit encore un ensemble comprenant au moins deux tels modules montés électriquement en série ou en parallèle entre eux.

Chaque élément de stockage E_{i,j} est unique de par sa conception. Le processus de fabrication des éléments de stockage ne permet pas l'obtention d'éléments complètement identiques. La capacité et la résistance interne notamment peuvent différer. De plus les phénomènes de vieillissement de ces éléments de stockage conduisent à des pertes de capacité et des augmentations de résistance interne qui tendent à augmenter ces différences de caractéristiques. Ainsi deux éléments de stockage en série qui sont donc traversés par un même courant peuvent voir leur état de charge évoluer différemment et doivent être équilibrés de manière à permettre une utilisation optimale de la batterie. Pour répondre à ces problématiques qui se posent dans le cas de la structure électrique de la figure 1, le dispositif de gestion comprend des moyens logiciels et/ou matériels qui mettent en oeuvre un procédé de gestion qui sera détaillé plus loin, qui a pour vocation d'équilibrer les états de charge de tout ou partie des éléments de stockage que comporte la batterie, de manière non-dissipative, après que des éléments de stockage à équilibrer en tension aient préalablement été sélectionnés parmi lesdites au moins deux branches.

Notamment, le dispositif de gestion comprend, afin de pouvoir mettre en oeuvre le procédé de gestion, un dispositif d'équilibrage de type non dissipatif des tensions électriques aux bornes des éléments de stockage de la batterie. Ce dispositif d'équilibrage comprend :
- un nombre N+1 d'éléments de commutation d'un premier type Cₚₖ (avec k variant encore de 1 à N+1) aptes à connecter électriquement en parallèle deux éléments de stockage appartenant respectivement aux première et deuxième branches à un même étage,
- un nombre 2N d'éléments de commutation d'un deuxième type aptes à connecter électriquement en parallèle deux éléments de stockage appartenant respectivement aux première et deuxième branches à des étages adjacents.

Plus précisément, le dispositif d'équilibrage comprend une première moitié N d'éléments de commutation du deuxième type, chacun repéré C_{dk,1} (où k varie de 2 à N). Chaque élément de commutation C_{dk,1} est placé sur une liaison électrique reliant la borne positive (respectivement négative) d'un élément de stockage de la première branche d'un étage donné à la borne positive (respectivement négative) de l'élément de stockage de la deuxième branche de l'étage directement adjacent et inférieur. Le dispositif d'équilibrage comprend une deuxième moitié N d'éléments de commutation du deuxième type, chacun repéré C_{dk,2} (où k varie de 2 à N). Chaque élément de commutation C_{dk,2} est placé sur une liaison électrique reliant la borne positive (respectivement négative) d'un élément de stockage de la première branche d'un étage donné à la borne positive (respectivement négative) de l'élément de stockage de la deuxième branche de l'étage directement adjacent et supérieur.

Chaque élément de commutation Cₚₖ est placé sur une liaison électrique reliant la borne positive (respectivement négative) d'un élément de stockage de la première branche d'un étage donné à la borne positive (respectivement négative) de l'élément de stockage de la deuxième branche du même étage.

Il ressort de ce qui précède que sur la figure 1, il est désigné par :
- E_{i,1} avec i=1,2,...,N les éléments de stockage de la première branche, dite branche principale, de la batterie,
- E_{i,2} avec i=1,2,...,N les éléments de stockage de la deuxième branche, dite branche secondaire, de la batterie,
- N_{i,1} avec i=1,2,...,N+1 les noeuds électriques de l'architecture de la première branche,
- N_{i,2} avec i=1,2,...,N+1 les noeuds électriques de l'architecture de la deuxième branche,
- Cₚₖ avec k=1,2,...,N+1 les éléments de commutation de premier type permettant de relier ou non les noeuds électriques N_{k,1} et N_{k,2},
- C_{dk,1} avec k=1,2,...,N les éléments de commutation permettant de relier ou non les noeuds électriques N_{k+1,1} et N_{k,2},
- C_{dk,2} avec k=1,2,...,N les éléments de commutation permettant de relier ou non les noeuds électriques N_{k,1} et N_{k+1,2}.
- A le point de potentiel le plus haut de la batterie,
- B le point de potentiel le plus bas de la batterie.

Il est appelé « étage X » de la batterie les éléments compris entre les noeuds N_{X,1}, N_{X,2}, N_{X+1,1}, N_{X+1,2}. Par exemple, l'étage 1 désigne les éléments compris entre les noeuds N_{1,1}, N_{1,2}, N_{2,1}, N_{2,2}, c'est-à-dire les éléments de stockage E_{1,1} et E_{1,2} ainsi que les éléments de commutation Cₚ₁, Cₚ₂ , C_{d1,1}, C_{d1,2}.

Les possibilités offertes par cette architecture sont :
- les éléments de commutation Cₚₖ permettent de connecter électriquement en parallèle entre eux les éléments de stockage d'un même étage,
- les connecteurs C_{dk,1} et C_{dk,2} permettent de connecter électriquement en parallèle entre eux les éléments de stockage d'étages adjacents.

Avantageusement, les éléments de commutation Cₚₖ, C_{dk,1} et C_{dk,2} sont des transistors à effet de champ à grille isolée plus couramment nommés « MOSFET » en terminologie anglo-saxonne pour « Metal Oxide Semiconductor Field Effect Transistor ». Cette variante présente l'avantage d'être commandés en tension pour contrôler le courant dans le circuit. Toutefois les éléments de commutation peuvent être de toute autre nature, telle que relais ou autres, dans la mesure où ils sont commandables et opposent une faible résistance au passage du courant une fois fermée.

Le procédé comprend préférentiellement :
- une étape de fourniture du dispositif d'équilibrage non dissipatif précédemment décrit,
- une étape de sélection consistant à choisir une partie uniquement des éléments de stockage de la première branche correspondant à un nombre d'étages inférieur au nombre total N d'étages de la batterie et une partie uniquement des éléments de stockage de la deuxième branche correspondant à un nombre d'étages inférieur au nombre total N d'étages de la batterie,
- une étape de pilotage des éléments de commutation Cₚₖ, C_{dk,1} et C_{dk,2} de sorte à connecter électriquement en parallèle entre eux les éléments de stockage sélectionnés de la première branche et les éléments de stockage sélectionnés de la deuxième branche, notamment dans un montage directement en parallèle.

Il convient d'entendre par « montage directement en parallèle » le fait que deux éléments de stockage sélectionnés voient leurs bornes directement reliées deux à deux, excluant une disposition en série.

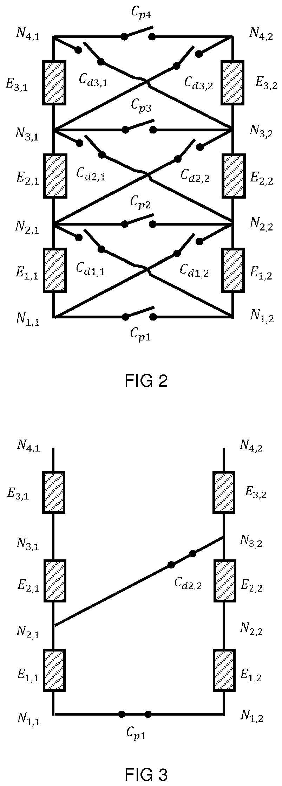

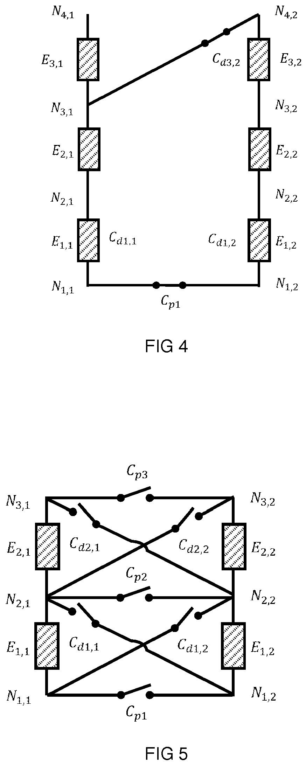

Le principe d'équilibrage par une mise directe en parallèle électriquement est présenté en référence aux figures 3 et 4 en application à la batterie à trois étages et au dispositif de gestion associé représentés à la figure 2. Deux branches sont connectées en parallèle entre elles et comprennent chacune trois éléments de stockage montés en série. La première branche comprend au moins les éléments de stockage E_{1,1}, E_{2,1} et E_{3,1} et les noeuds N_{1,1}, N_{2,1}, N_{3,1} et N_{4,1}. La deuxième branche comprend au moins les trois éléments de stockage E_{1,2}, E_{2,2}, E_{3,2} et les noeuds N_{1,2}, N_{2,2}, N_{3,2} et N_{4,2}. La valeur de N est égale à 3. Le dispositif d'équilibrage comprend
- un nombre N+1, soit au nombre de 4, éléments de commutation du premier type repérés Cₚ₁, Cₚ₂, Cₚ₃ et Cₚ₄ et aptes à connecter électriquement en parallèle deux éléments de stockage appartenant respectivement aux première et deuxième branches à un même étage ; chaque élément de commutation Cₚ₁, Cₚ₂, Cₚ₃ et Cₚ₄ est placé sur une liaison électrique reliant la borne positive (respectivement négative) d'un élément de stockage de la première branche d'un étage donné à la borne positive (respectivement négative) de l'élément de stockage de la deuxième branche du même étage,
- une première moitié de N éléments de commutation du deuxième type, soit au nombre de 3 et repérés C_{d1,1}, C_{d2,1}, C_{d3,1} ; chaque élément de commutation C_{d1,1}, C_{d2,1}, C_{d3,1} est placé sur une liaison électrique reliant la borne positive (respectivement négative) d'un élément de stockage de la première branche d'un étage donné à la borne positive (respectivement négative) de l'élément de stockage de la deuxième branche de l'étage directement adjacent et inférieur,
- une deuxième moitié de N éléments de commutation du deuxième type, soit au nombre de 3 et repérés C_{d1,2}, C_{d2,2}, C_{d3,2} ; chaque élément de commutation C_{d1,2}, C_{d2,2}, C_{d3,2} est placé sur une liaison électrique reliant la borne positive (respectivement négative) d'un élément de stockage de la première branche d'un étage donné à la borne positive (respectivement négative) de l'élément de stockage de la deuxième branche de l'étage directement adjacent et supérieur.

Sur la figure 3, l'élément de stockage E_{1,1} a été préalablement sélectionné parmi les trois éléments de stockage de la première branche et les éléments de stockage E_{1,2} et E_{2,2} ont été préalablement sélectionnés parmi les trois éléments de stockage de la deuxième branche. Puis, durant l'étape de pilotage des éléments de commutation de premier type Cₚ₁, Cₚ₂, Cₚ₃ et Cₚ₄ et des éléments de commutation de deuxième type C_{d1,1}, C_{d2,1}, C_{d3,1} et C_{d1,2}, C_{d2,2}, C_{d3,2}, seuls l'élément de commutation de premier type Cₚ₁ et l'élément de commutation de deuxième type C_{d2,2} sont commandés vers leur état de fermeture, tous les autres éléments de commutation restant à leur état d'ouverture, de sorte à connecter électriquement en parallèle entre eux l'élément de stockage E_{1,1} sélectionné de la première branche et les éléments de stockage E_{1,2} et E_{2,2} sélectionnés de la deuxième branche, notamment dans un montage directement en parallèle.

Sur la figure 4, les éléments de stockage E_{1,1} et E_{2,1} ont été préalablement sélectionnés parmi les trois éléments de stockage de la première branche et les trois éléments de stockage E_{1,2}, E_{2,2} et E_{3,2} ont été préalablement sélectionnés parmi les trois éléments de stockage de la deuxième branche. Puis, durant l'étape de pilotage des éléments de commutation de premier type Cₚ₁, Cₚ₂, Cₚ₃ et Cₚ₄ et des éléments de commutation de deuxième type C_{d1,1}, C_{d2,1}, C_{d3,1} et C_{d1,2}, C_{d2,2}, C_{d3,2}, seuls l'élément de commutation de premier type Cₚ₁ et l'élément de commutation de deuxième type C_{d3,2} sont commandés vers leur état de fermeture, tous les autres éléments de commutation restant à leur état d'ouverture, de sorte à connecter électriquement en parallèle entre eux les éléments de stockage E_{1,1} et E_{2,1} sélectionnés de la première branche et les éléments de stockage E_{1,2}, E_{2,2} et E_{3,2} sélectionnés de la deuxième branche, notamment dans un montage directement en parallèle.

Suite à l'étape de pilotage, le montage en parallèle à au moins deux éléments de stockage chacun constitué par une cellule électrochimique unique de par sa conception, s'accompagne d'une égalité de tension électrique qui engendre la circulation d'un courant électrique d'équilibrage. Ainsi, le courant d'équilibrage va charger progressivement la cellule la moins chargée et son état de charge augmentant, le courant d'équilibrage diminue progressivement.

Pour la mise en oeuvre du procédé de gestion, le dispositif de gestion comprend une unité de commande (non représentée) générant des ordres d'actionnement pilotant individuellement les éléments de commutation de premier type Cₚₖ, et de deuxième type C_{dk,1} et C_{dk,2}, ces ordres étant choisis de sorte à connecter des éléments de stockage (préalablement sélectionnés par l'unité de commande en fonction de critères donnés), appartenant à des branches différentes, de sorte à mettre en oeuvre le procédé de gestion décrit dans ce document, notamment dans un montage en parallèle permettant de réaliser une étape d'équilibrage des états de charge des éléments de stockage sélectionnés. Les éléments de stockage mis en oeuvre par l'opération d'équilibrage sont donc sélectionnables, grâce à l'aménagement de la pluralité de liaisons de raccordement entre les branches et de la pluralité d'éléments de commutation Cₚₖ, C_{dk,1} et C_{dk,2} parmi l'ensemble des éléments de stockage que comprend la batterie.

Préférentiellement, durant l'étape de pilotage les éléments de commutation de premier type Cₚₖ, et de deuxième type C_{dk,1} et C_{dk,2}, seule une partie des éléments de commutation de premier type Cₚₖ et seule une partie des éléments de commutation de deuxième type C_{dk,1} et C_{dk,2} changent d'état. En effet, sur la figure 3, seuls l'élément de commutation de premier type Cₚ₁ et l'élément de commutation de deuxième type C_{d2,2} changent d'état de leur état d'ouverture à leur état de fermeture, tous les autres éléments de commutation restant à leur état d'ouverture. De manière similaire, sur la figure 4, seuls l'élément de commutation de premier type Cₚ₁ et l'élément de commutation de deuxième type C_{d3,2} changent d'état de leur état d'ouverture à leur état de fermeture, tous les autres éléments de commutation restant à leur état d'ouverture.

Lorsqu'il s'agit de mettre en oeuvre la stratégie de gestion lorsque la batterie est connectée et durant une phase de décharge de la batterie, l'étape de sélection comprend préférentiellement une étape de détermination d'au moins un élément de stockage de la batterie aux bornes duquel la tension électrique est inférieure à la tension des autres éléments de stockage d'un seuil prédéterminé, les éléments de stockage sélectionnés à l'étape de sélection incluant ledit au moins un élément de stockage déterminé à l'étape de détermination. En fonction de la nature chimique de l'élément de stockage et de l'intensité du courant, ce seuil prédéterminé peut varier. Il est toutefois par exemple de l'ordre de 10 mV.

Par contre, lorsqu'il s'agit de mettre en oeuvre la stratégie de gestion lorsque la batterie est connectée et durant une phase de charge de la batterie, l'étape de sélection comprend préférentiellement une étape d'identification d'au moins un élément de stockage de la batterie aux bornes duquel la tension électrique est supérieure à la tension des autres éléments de stockage d'un seuil prédéterminé, les éléments de stockage sélectionnés à l'étape de sélection incluant ledit au moins un élément de stockage identifié à l'étape d'identification. En fonction de la nature chimique de l'élément de stockage et de l'intensité du courant, ce seuil prédéterminé peut varier. Il est toutefois par exemple de l'ordre de 10 mV.

Ainsi, il faut préférentiellement prioriser la recharge des éléments de stockage ayant les plus basses tensions lors de la décharge de la batterie et il faut prioriser la décharge des éléments de stockage ayant les tensions les plus élevées lors de la charge de la batterie. La sélection des éléments de stockage durant l'étape de sélection tient compte de ces priorités.

Préférentiellement, le nombre d'étages sélectionnés durant l'étape de sélection et le choix des étages sélectionnés durant l'étape de sélection parmi la première branche et le nombre d'étages sélectionnés durant l'étape de sélection et le choix des étages sélectionnés durant l'étape de sélection parmi la deuxième branche, sont choisis à partir, c'est-à-dire en fonction, de critères de sélection qui tiennent compte :
- d'une dynamique recherchée d'équilibrage des tensions électriques aux bornes des éléments de stockage E_{i,j} connectés électriquement en parallèle suite à l'étape de pilotage,
- et/ou d'une valeur maximale de l'intensité électrique circulant dans lesdits éléments de stockage, notamment correspondant audit courant électrique d'équilibrage.

En particulier, il peut être fait en sorte que durant l'étape de sélection, le nombre d'éléments de stockage E_{i,j} sélectionnés parmi la première branche et le nombre d'éléments de stockage E_{i,j} sélectionnés parmi la deuxième branche soient différents de manière que l'étape de pilotage met électriquement en parallèle un nombre différent d'étages parmi la première branche et parmi la deuxième branche. Par exemple sur la figure 3, seul l'élément de stockage de l'étage 1 de la première branche est sélectionné à l'étape de sélection tandis que les deux éléments de stockage des étages 1 et 2 de la deuxième branche sont sélectionnés à l'étape de sélection, de manière que l'étape de pilotage met électriquement en parallèle l'étage 1 de la première branche avec les deux étages 1 et 2 de la deuxième branche. Par exemple sur la figure 4, seuls les deux éléments de stockage des étages 1 et 2 de la première branche sont sélectionnés à l'étape de sélection tandis que les trois éléments de stockage des étages 1, 2 et 3 de la deuxième branche sont sélectionnés à l'étape de sélection, de manière que l'étape de pilotage met électriquement en parallèle les deux étages 1 et 2 de la première branche avec les trois étages 1, 2 et 3 de la deuxième branche. Toutefois ces dispositions ne sont pas exclusives et limitatives et il est possible de prévoir dans certaines conditions que l'étape de pilotage mette électriquement en parallèle un nombre égal d'étages parmi la première branche et parmi la deuxième branche.

De manière préférentielle, l'étape de sélection comprend :
- une étape d'identification, parmi la branche qui n'inclue pas ledit au moins un élément de stockage déterminé à l'étape de détermination, d'un nombre d'éléments de stockage E_{i,j} supérieur au nombre d'élément de stockage déterminé à l'étape de détermination et ayant des états de charge supérieurs à celui dudit au moins un élément de stockage déterminé à l'étape de détermination,
- puis une étape d'estimation du courant électrique d'équilibrage circulant dans ledit au moins un élément de stockage déterminé à l'étape de détermination après la mise en oeuvre de l'étape de pilotage des éléments de commutation.

Préférentiellement, l'étape de sélection comprend une étape d'estimation de la durée nécessaire à la recharge électrique dudit au moins un élément de stockage déterminé à l'étape de détermination après la mise en oeuvre de l'étape de pilotage des éléments de commutation.

L'étape de sélection peut notamment comprendre une étape d'estimation de la différence de potentiel nécessaire à la recharge électrique dudit au moins un élément de stockage déterminé à l'étape de détermination, notamment à partir de la connaissance des résistances des composants du dispositif d'équilibrage. Ensuite, le nombre et les étages des éléments de stockage sélectionnés à l'étape de sélection parmi la branche qui ne contient pas ledit au moins un élément de stockage déterminé à l'étape de détermination sont préférentiellement choisis à partir de ladite différence de potentiel et d'une manière permettant de générer le courant électrique d'équilibrage après la mise en oeuvre de l'étape de pilotage des éléments de commutation.

En effet, le point clef qui permet de dimensionner les courants électrique d'équilibrage, est la résistance équivalente des mailles formées lors de la fermeture des éléments de commutation qui assurent la mise en parallèle des éléments de stockage à la suite de l'étape de pilotage. Un choix judicieux des composants et notamment des éléments de commutation, permet l'obtention de la résistance équivalente souhaitée et par conséquent du courant électrique d'équilibrage maximal souhaité. Le dimensionnement des composants et des pistes de puissance est donc à faire en accord avec ce courant électrique d'équilibrage maximal.

Cette variante de fonctionnement peut être particulièrement intéressante dans le cas où un seul élément de stockage présente une défaillance. Cet élément de stockage défaillant a besoin d'un courant électrique d'équilibrage important de manière à le recharger afin qu'il ne soit pas un objet limitatif lors de la décharge de la batterie.

Ces principes sont détaillés en application à l'exemple de la figure 3 :

Dans un premier temps, l'élément de stockage défaillant (qui est dans cet exemple l'élément de stockage E_{1,1}) de la première branche est identifié soit grâce à une mesure de tension qui est bien plus faible que celle des autres éléments de stockage, soit grâce à une estimation de son état de charge ou de sa capacité moindre.

Puis dans un deuxième temps, l'unité de commande identifie si la situation est propice à la mise en parallèle de deux éléments de stockage (qui sont dans cet exemple les éléments de stockage E_{1,2} et E_{2,2}) de la deuxième branche vis-à-vis d'un seul élément E_{1,1} de la première branche.

Si les éléments de stockage E_{2,2} et E_{1,2} ont des états de charge supérieurs à ceux de l'élément de stockage E_{1,1}, alors il est possible de réaliser la mise en parallèle des deux éléments de la deuxième branche vis-à-vis de l'élément de stockage E_{1,1} de la première branche. A partir des états de charge des éléments de stockage de la batterie et des tensions limites d'utilisation des éléments de stockage, un courant électrique et une durée de recharge nécessaire sont estimés.

Ensuite, à partir de la connaissance des résistances des composants, l'unité de commande estime la différence de potentiel nécessaire à la recharge de l'élément de stockage E_{1,1} défaillant. Cette différence de potentiel informe donc sur le nombre d'étages à mettre en jeu pour générer le courant d'équilibrage et quels sont les étages les plus adaptés.

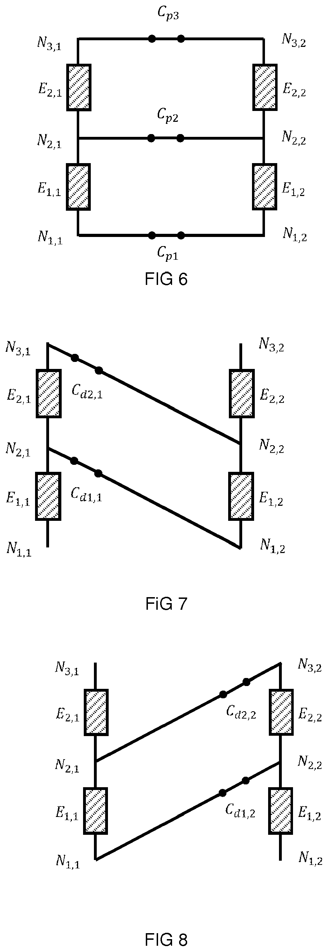

Préférentiellement et en référence aux figures 6 à 8 en application à la batterie à deux étages et au dispositif de gestion associé représentés à la figure 5, le procédé peut en outre comprendre :
- une étape de commande uniquement de tous les éléments de commutation de premier type Cₚₖ durant une première période afin que les deux éléments de stockage appartenant respectivement aux première et deuxième branches à un même étage sont reliés électriquement en parallèle entre eux, et ce pour chaque étage de la batterie,
- et/ou une étape de commande uniquement de la première moitié des éléments de commutation de deuxième type C_{dk,1} durant une deuxième période afin que les éléments de stockage de la première branche soient chacun connectés électriquement en parallèle avec l'élément de stockage de la deuxième branche à l'étage adjacent et inférieur,
- et/ou une étape de commande uniquement de la deuxième moitié des éléments de commutation de deuxième type C_{dk,2} durant une troisième période afin que les éléments de stockage de la première branche soient chacun connectés électriquement en parallèle avec l'élément de stockage de la deuxième branche à l'étage adjacent et supérieur.

Deux branches sont connectées en parallèle entre elles et comprennent chacune au moins deux éléments de stockage montés en série. La première branche comprend au moins les éléments de stockage E_{1,1}, E_{2,1} et les noeuds N_{1,1}, N_{2,1}, N_{3,1}. La deuxième branche comprend au moins les deux éléments de stockage E_{1,2}, E_{2,2} et les noeuds N_{1,2}, N_{2,2}, N_{3,2}. La valeur de N est égale à 2. Le dispositif d'équilibrage comprend
- un nombre N+1, soit au nombre de 3, éléments de commutation du premier type repérés Cₚ₁, Cₚ₂, et Cₚ₃ et aptes à connecter électriquement en parallèle deux éléments de stockage appartenant respectivement aux première et deuxième branches à un même étage ; chaque élément de commutation Cₚ₁, Cₚ₂, Cₚ₃ est placé sur une liaison électrique reliant la borne positive (respectivement négative) d'un élément de stockage de la première branche d'un étage donné à la borne positive (respectivement négative) de l'élément de stockage de la deuxième branche du même étage,
- une première moitié de N éléments de commutation du deuxième type, soit au nombre de 2 et repérés C_{d1,1}, C_{d2,1}, chaque élément de commutation C_{d1,1}, C_{d2,1}, est placé sur une liaison électrique reliant la borne positive (respectivement négative) d'un élément de stockage de la première branche d'un étage donné à la borne positive (respectivement négative) de l'élément de stockage de la deuxième branche de l'étage directement adjacent et inférieur,
- une deuxième moitié de N éléments de commutation du deuxième type, soit au nombre de 2 et repérés C_{d1,2}, C_{d2,2} ; chaque élément de commutation C_{d1,2}, C_{d2,2}, est placé sur une liaison électrique reliant la borne positive (respectivement négative) d'un élément de stockage de la première branche d'un étage donné à la borne positive (respectivement négative) de l'élément de stockage de la deuxième branche de l'étage directement adjacent et supérieur.

Sur la figure 6, uniquement tous les éléments de commutation de premier type Cₚ₁, Cₚ₂, et Cₚ₃ sont commandés (tous les éléments de commutation de deuxième type étant conservés à leur état d'ouverture) durant une première période afin que les deux éléments de stockage appartenant respectivement aux première et deuxième branches à un même étage sont reliés électriquement en parallèle entre eux, et ce pour chaque étage de la batterie. La fermeture conjointe de Cₚ₁, Cₚ₂ permet que, durant la première période, les deux éléments de stockage E_{1,1} et E_{1,2} appartenant respectivement aux première et deuxième branches au même étage 1 sont reliés électriquement en parallèle entre eux. La fermeture conjointe de Cₚ₂, Cₚ₃ permet que, durant la première période, les deux éléments de stockage E_{2,1} et E_{2,2} appartenant respectivement aux première et deuxième branches au même étage 2 sont reliés électriquement en parallèle entre eux. Par soucis de clarté, les éléments de commutation à l'état ouvert ne sont pas représentés. Dans ce mode de fonctionnement, le courant électrique de la batterie traverse à la fois la première branche et la deuxième branche. Des transferts d'énergie s'opèrent au sein des étages entre les première et deuxième branches.

Sur la figure 7, uniquement la première moitié des éléments de commutation de deuxième type C_{d1,1}, C_{d2,1} est commandée durant la deuxième période afin que l'élément de stockage E_{2,1} de l'étage 2 de la première branche soit connecté électriquement en parallèle avec l'élément de stockage E_{1,2} de l'étage 1 de la deuxième branche, c'est-à-dire à l'étage adjacent et inférieur. Il en est de même pour tous les autres étages de la batterie.

Sur la figure 8, uniquement la deuxième moitié des éléments de commutation de deuxième type C_{d1,2}, C_{d2,2} est commandée durant la troisième période afin que l'élément de stockage E_{1,1} de l'étage 1 de la première branche soit connecté électriquement en parallèle avec l'élément de stockage E_{2,2} de l'étage 2 de la deuxième branche, c'est-à-dire à l'étage adjacent et supérieur. Il en est de même pour tous les autres étages de la batterie. Par soucis de clarté, les éléments de commutation à l'état ouvert ne sont pas représentés. Dans ce mode de fonctionnement, le courant de la batterie traverse à la fois la première branche et la deuxième branche. Des transferts d'énergie s'opèrent entre les étages 1 et 2.

Sur la figure 5, tous les éléments de commutation de premier type et de deuxième type sont à leur état ouvert. Dans cette configuration, le courant de la batterie traverse la première branche mais pas la deuxième branche. Aucun transfert d'énergie ne se fait entre les étages.. Dans ce mode de fonctionnement, le courant de la batterie traverse à la fois la première branche et la deuxième branche. Des transferts d'énergie s'opèrent entre les étages 1 et 2.

Il est donc proposé dans ce document d'utiliser certains éléments de stockage de la batterie comme réservoir transitoire d'énergie et de piloter le dispositif d'équilibrage de manière à transférer l'énergie entre les éléments de stockage. Ainsi, les chaines de conversion d'énergie sont réduites à leur plus simple expression et cela évite l'ajout de composant électrique de stockage énergétique intermédiaire pour le transfert d'énergie. Le procédé de gestion peut être mis en oeuvre en mode « connecté », c'est-à-dire lorsque la batterie est en cours de charge et/ou en cours de décharge. Les moyens de pilotage des éléments de commutation Cₚₖ, C_{dk,1} et C_{dk,2} sont configurés pour les piloter de sorte à transférer de l'énergie d'un étage à n'importe lequel des autres étages, notamment par une itération successive des commandes des figures 6 à 8.

Entre deux modes de fonctionnement successifs selon les figures 6 à 8, il peut être intéressant de transiter par un mode de fonctionnement selon la figure 5 où tous les éléments de commutation de premier type et de deuxième type sont ouverts afin de s'assurer que les éléments de commutation soient bien ouverts avant d'entrer dans un nouveau mode de fonctionnement selon l'une des figures 6 à 8.

Des simulations ont montré que la stratégie de gestion précédente permet le retour à l'état d'équilibre en état de charge sans courant de décharge de la batterie, avec un déséquilibre des états de charge initiaux même dans le cas d'une dispersion des capacités des éléments de stockage.

Des simulations ont montré que la stratégie de gestion précédente permet aussi le retour à l'état d'équilibre en état de charge même dans le cas où un courant de décharge de la batterie circule, en dépit de dispersions de capacités des éléments de stockage : l'alternance des modes de fonctionnement selon les figures 5 à 8 permet le retour à l'équilibre en termes d'état de charge.

Une application particulière mais non exclusive consiste à aménager un tel dispositif de gestion à bord d'un véhicule automobile pour contrôler la batterie de stockage d'énergie électrique alimentant une chaine de traction électrique du véhicule et/ou des organes auxiliaires électriques embarqués à bord du véhicule. Toutefois l'invention peut être appliquée à tout système de batterie qui est composé par au moins deux cellules électrochimiques en série, comme les batteries d'ordinateur portable par exemple, ou bien encore à l'équilibrage de supercapacités.

## Revendications

1. Procédé de gestion d'une batterie de stockage d'énergie électrique comportant au moins des première et deuxième branches connectées électriquement en parallèle et ayant chacune N éléments de stockage (E_{i,j}) connectés électriquement en série, comprenant :
- une étape de fourniture d'un dispositif d'équilibrage non dissipatif des tensions électriques aux bornes des éléments de stockage de la batterie, comprenant N+1 éléments de commutation d'un premier type (Cₚₖ) aptes à connecter électriquement en parallèle deux éléments de stockage appartenant respectivement aux première et deuxième branches à un même étage et 2N éléments de commutation d'un deuxième type (C_{dk,1}, C_{dk,2}) aptes à connecter électriquement en parallèle deux éléments de stockage appartenant respectivement aux première et deuxième branches à des étages adjacents,
- une étape de sélection consistant à choisir une partie uniquement des éléments de stockage de la première branche correspondant à un nombre d'étages inférieur au nombre total d'étages de la batterie et une partie uniquement des éléments de stockage de la deuxième branche correspondant à un nombre d'étages inférieur au nombre total d'étages de la batterie,
- une étape de pilotage des éléments de commutation connectant électriquement en parallèle entre eux les éléments de stockage sélectionnés de la première branche et les éléments de stockage sélectionnés de la deuxième branche.

2. Procédé selon la revendication 1, **caractérisé en ce que** durant l'étape de pilotage seule une partie des éléments de commutation de premier type et seule une partie des éléments de commutation de deuxième type changent d'état.

3. Procédé selon l'une des revendications 1 ou 2, **caractérisé en ce que** durant une phase de décharge de la batterie, l'étape de sélection comprend une étape de détermination d'au moins un élément de stockage de la batterie aux bornes duquel la tension électrique est inférieure à la tension des autres éléments de stockage d'un seuil prédéterminé, les éléments de stockage sélectionnés à l'étape de sélection incluant ledit au moins un élément de stockage déterminé à l'étape de détermination.

4. Procédé selon l'une des revendications 1 à 3, **caractérisé en ce que** durant une phase de charge de la batterie, l'étape de sélection comprend une étape d'identification d'au moins un élément de stockage de la batterie aux bornes duquel la tension électrique est supérieure à la tension des autres éléments de stockage d'un seuil prédéterminé, les éléments de stockage sélectionnés à l'étape de sélection incluant ledit au moins un élément de stockage identifié à l'étape d'identification.

5. Procédé selon l'une des revendications 1 à 4, **caractérisé en ce que** le nombre d'étages et le choix des étages sélectionnés parmi la première branche et le nombre d'étages et le choix des étages sélectionnés parmi la deuxième branche sont fonctions de critères de sélection tenant compte d'une dynamique recherchée d'équilibrage des tensions électriques aux bornes des éléments de stockage connectés électriquement en parallèle suite à l'étape de pilotage et/ou d'une valeur maximale de l'intensité électrique circulant dans lesdits éléments de stockage.

6. Procédé selon l'une des revendications 1 à 5, **caractérisé en ce que** durant l'étape de sélection, le nombre d'éléments de stockage sélectionnés parmi la première branche et le nombre d'éléments de stockage sélectionnés parmi la deuxième branche sont différents de manière que l'étape de pilotage met électriquement en parallèle un nombre différent d'étages parmi la première branche et parmi la deuxième branche.

7. Procédé selon l'une des revendications 3 et 6, **caractérisé en ce que** l'étape de sélection comprend une étape d'identification, parmi la branche n'incluant pas ledit au moins un élément de stockage déterminé à l'étape de détermination, d'un nombre d'éléments de stockage supérieur au nombre d'élément de stockage déterminé à l'étape de détermination et ayant des états de charge supérieurs à celui dudit au moins un élément de stockage déterminé à l'étape de détermination, puis une étape d'estimation d'un courant électrique d'équilibrage circulant dans ledit au moins un élément de stockage déterminé à l'étape de détermination après la mise en oeuvre de ladite étape de pilotage.

8. Procédé selon la revendication 7, **caractérisé en ce que** l'étape de sélection comprend une étape d'estimation de la durée nécessaire à la recharge électrique dudit au moins un élément de stockage déterminé à l'étape de détermination après la mise en oeuvre de ladite étape de pilotage.

9. Procédé selon l'une des revendications 7 ou 8, **caractérisé en ce que** l'étape de sélection comprend une étape d'estimation de la différence de potentiel nécessaire à la recharge électrique dudit au moins un élément de stockage déterminé à l'étape de détermination, notamment à partir de la connaissance des résistances des composants du dispositif d'équilibrage, le nombre et les étages des éléments de stockage sélectionnés à l'étape de sélection parmi la branche ne contenant pas ledit au moins un élément de stockage déterminé à l'étape de détermination étant choisis à partir de ladite différence de potentiel et d'une manière permettant de générer ledit courant électrique d'équilibrage après la mise en oeuvre de ladite étape de pilotage.

10. Procédé selon l'une des revendications 1 à 9, **caractérisé en ce qu'**il comprend :
- une étape de commande uniquement de tous les éléments de commutation de premier type (Cₚₖ) durant une première période afin que les deux éléments de stockage appartenant respectivement aux première et deuxième branches à un même étage sont reliés électriquement en parallèle entre eux, et ce pour chaque étage de la batterie,
- et/ou une étape de commande uniquement d'une première moitié des éléments de commutation de deuxième type (C_{dk,1}) durant une deuxième période afin que les éléments de stockage de la première branche soient chacun connectés électriquement en parallèle avec l'élément de stockage de la deuxième branche à l'étage adjacent et inférieur,
- et/ou une étape de commande uniquement d'une deuxième moitié des éléments de commutation de deuxième type (C_{dk,2}) durant une troisième période afin que les éléments de stockage de la première branche soient chacun connectés électriquement en parallèle avec l'élément de stockage de la deuxième branche à l'étage adjacent et supérieur.

11. Dispositif de gestion d'une batterie de stockage d'énergie électrique comportant des première et deuxième branches connectées électriquement en parallèle et ayant chacune N éléments de stockage (E_{i,j}) connectés électriquement en série, comprenant un dispositif d'équilibrage non dissipatif des tensions électriques aux bornes des éléments de stockage de la batterie, comprenant N+1 éléments de commutation d'un premier type (C_{p,k}) aptes à connecter électriquement en parallèle deux éléments de stockage appartenant respectivement aux première et deuxième branches à un même étage et 2N éléments de commutation d'un deuxième type (C_{dk,1}, C_{dk,2}) aptes à connecter électriquement en parallèle deux éléments de stockage appartenant respectivement aux première et deuxième branches à des étages adjacents et une unité de commande pilotant individuellement les éléments de commutation de premier et de deuxième type de manière à mettre en oeuvre le procédé selon l'une quelconque des revendications précédentes.

## Patentansprüche

1. Verfahren zum Management einer Batterie zur Speicherung elektrischer Energie, die wenigstens einen ersten und einen zweiten Zweig umfasst, die elektrisch parallelgeschaltet sind und jeweils N elektrisch in Reihe geschaltete Speicherelemente (Eᵢⱼ) aufweisen, umfassend:
- einen Schritt der Bereitstellung einer Vorrichtung zum verlustfreien Ausgleichen der elektrischen Spannungen an den Klemmen der Speicherelemente der Batterie, welche N+1 Schaltelemente eines ersten Typs (Cₚₖ), die in der Lage sind, zwei Speicherelemente, die dem ersten bzw. zweiten Zweig auf ein und derselben Stufe angehören, elektrisch parallel zu schalten, und 2N Schaltelemente eines zweiten Typs (C_{dk,1}, C_{dk,2}), die in der Lage sind, zwei Speicherelemente, die dem ersten bzw. zweiten Zweig auf benachbarten Stufen angehören, elektrisch parallel zu schalten, umfasst,
- einen Schritt der Auswahl, welcher darin besteht, einen Teil ausschließlich der Speicherelemente des ersten Zweiges, der einer Anzahl von Stufen entspricht, die kleiner als die Gesamtzahl der Stufen der Batterie ist, und einen Teil ausschließlich der Speicherelemente des zweiten Zweiges, der einer Anzahl von Stufen entspricht, die kleiner als die Gesamtzahl der Stufen der Batterie ist, zu wählen,
- einen Schritt der Ansteuerung der Schaltelemente, welcher die ausgewählten Speicherelemente des ersten Zweiges und die ausgewählten Speicherelemente des zweiten Zweiges elektrisch parallel zueinander schaltet.

2. Verfahren nach Anspruch 1, **dadurch gekennzeichnet, dass** während des Schrittes der Ansteuerung nur ein Teil der Schaltelemente vom ersten Typ und nur ein Teil der Schaltelemente vom zweiten Typ ihren Zustand ändern.

3. Verfahren nach einem der Ansprüche 1 oder 2, **dadurch gekennzeichnet, dass** während einer Entladungsphase der Batterie der Schritt der Auswahl einen Schritt der Bestimmung wenigstens eines Speicherelements der Batterie umfasst, an dessen Klemmen die elektrische Spannung um einen vorbestimmten Schwellenwert niedriger als die Spannung der anderen Speicherelemente ist, wobei die im Schritt der Auswahl ausgewählten Speicherelemente dieses wenigstens eine Speicherelement, das im Schritt der Bestimmung bestimmt wurde, enthalten.

4. Verfahren nach einem der Ansprüche 1 bis 3, **dadurch gekennzeichnet, dass** während einer Ladungsphase der Batterie der Schritt der Auswahl einen Schritt der Identifizierung wenigstens eines Speicherelements der Batterie umfasst, an dessen Klemmen die elektrische Spannung um einen vorbestimmten Schwellenwert höher als die Spannung der anderen Speicherelemente ist, wobei die im Schritt der Auswahl ausgewählten Speicherelemente dieses wenigstens eine Speicherelement, das im Schritt der Identifizierung identifiziert wurde, enthalten.

5. Verfahren nach einem der Ansprüche 1 bis 4, **dadurch gekennzeichnet, dass** die Anzahl der Stufen und die Wahl der ausgewählten Stufen aus dem ersten Zweig und die Anzahl der Stufen und die Wahl der ausgewählten Stufen aus dem zweiten Zweig von Auswahlkriterien abhängig sind, welche eine angestrebte Dynamik des Ausgleichs der elektrischen Spannungen an den Klemmen der Speicherelemente, die nach dem Schritt der Ansteuerung elektrisch parallelgeschaltet werden, und/oder einen maximalen Wert der elektrischen Stromstärke des in diesen Speicherelementen fließenden Stroms berücksichtigen.

6. Verfahren nach einem der Ansprüche 1 bis 5, **dadurch gekennzeichnet, dass** während des Schrittes der Auswahl die Anzahl ausgewählter Speicherelemente aus dem ersten Zweig und die Anzahl ausgewählter Speicherelemente aus dem zweiten Zweig verschieden sind, so dass der Schritt der Ansteuerung unterschiedliche Anzahlen von Stufen aus dem ersten Zweig und aus dem zweiten Zweig elektrisch parallel schaltet.

7. Verfahren nach einem der Ansprüche 3 und 6, **dadurch gekennzeichnet, dass** der Schritt der Auswahl einen Schritt der Identifizierung, in dem nicht das im Schritt der Bestimmung bestimmte wenigstens eine Speicherelement enthaltenden Zweig, einer Anzahl von Speicherelementen umfasst, die größer als die im Schritt der Bestimmung bestimmte Anzahl von Speicherelementen ist, mit Ladezuständen, die höher als derjenige des im Schritt der Bestimmung bestimmten wenigstens einen Speicherelements sind, und anschließend einen Schritt der Schätzung eines elektrischen Ausgleichsstroms, der nach der Durchführung des Schrittes der Ansteuerung in dem im Schritt der Bestimmung bestimmten wenigstens einen Speicherelement fließt.

8. Verfahren nach Anspruch 7, **dadurch gekennzeichnet, dass** der Schritt der Auswahl einen Schritt der Schätzung der Dauer umfasst, die nach der Durchführung des Schrittes der Ansteuerung für das elektrische Wiederaufladen des im Schritt der Bestimmung bestimmten wenigstens einen Speicherelements erforderlich ist.

9. Verfahren nach einem der Ansprüche 7 oder 8, **dadurch gekennzeichnet, dass** der Schritt der Auswahl einen Schritt der Schätzung der Potentialdifferenz umfasst, die für das elektrische Wiederaufladen des im Schritt der Bestimmung bestimmten wenigstens einen Speicherelements erforderlich ist, insbesondere ausgehend von der Kenntnis der Widerstände der Komponenten der Ausgleichsvorrichtung, wobei die Anzahl und die Stufen der Speicherelemente, die im Schritt der Auswahl aus dem nicht das im Schritt der Bestimmung bestimmte wenigstens eine Speicherelement enthaltenden Zweig ausgewählt werden, ausgehend von dieser Potentialdifferenz und auf eine Weise gewählt werden, die es ermöglicht, nach der Durchführung des Schrittes der Ansteuerung den elektrischen Ausgleichsstrom zu erzeugen.

10. Verfahren nach einem der Ansprüche 1 bis 9, **dadurch gekennzeichnet, dass** es umfasst:
- einen Schritt der Steuerung ausschließlich aller Schaltelemente vom ersten Typ (Cₚₖ) während eines ersten Zeitraums, damit die zwei Speicherelemente, die dem ersten bzw. zweiten Zweig auf ein und derselben Stufe angehören, elektrisch parallel zueinander geschaltet werden, und zwar für jede Stufe der Batterie,
- und/oder einen Schritt der Steuerung ausschließlich einer ersten Hälfte der Schaltelemente vom zweiten Typ (C_{dk,1}) während eines zweiten Zeitraums, damit die Speicherelemente des ersten Zweiges jeweils zu dem Speicherelement des zweiten Zweiges auf der benachbarten und niedrigeren Stufe elektrisch parallelgeschaltet werden,
- und/oder einen Schritt der Steuerung ausschließlich einer zweiten Hälfte der Schaltelemente vom zweiten Typ (C_{dk,2}) während eines dritten Zeitraums, damit die Speicherelemente des ersten Zweiges jeweils zu dem Speicherelement des zweiten Zweiges auf der benachbarten und höheren Stufe elektrisch parallelgeschaltet werden.

11. Vorrichtung zum Management einer Batterie zur Speicherung elektrischer Energie, die einen ersten und einen zweiten Zweig umfasst, die elektrisch parallelgeschaltet sind und jeweils N elektrisch in Reihe geschaltete Speicherelemente (Eᵢⱼ) aufweisen, umfassend: eine Vorrichtung zum verlustfreien Ausgleichen der elektrischen Spannungen an den Klemmen der Speicherelemente der Batterie, welche N+1 Schaltelemente eines ersten Typs (C_{p,k}), die in der Lage sind, zwei Speicherelemente, die dem ersten bzw. zweiten Zweig auf ein und derselben Stufe angehören, elektrisch parallel zu schalten, und 2N Schaltelemente eines zweiten Typs (C_{dk,1}, C_{dk,2}), die in der Lage sind, zwei Speicherelemente, die dem ersten bzw. zweiten Zweig auf benachbarten Stufen angehören, elektrisch parallel zu schalten, umfasst, und eine Steuereinheit, welche die Schaltelemente vom ersten und vom zweiten Typ individuell ansteuert, um das Verfahren nach einem der Ansprüche durchzuführen.

## Claims

1. A method for managing an electrical energy storage battery comprising at least first and second branches electrically connected in parallel and each having N storage elements (E_{i,j}) electrically connected in series, said method comprising:
- a step of providing a non-dissipative balancing device for balancing the electrical voltages at the terminals of the storage elements of the battery, said device comprising N+1 switching elements of a first type (Cₚₖ) capable of electrically connecting, in parallel, two storage elements belonging respectively to first and second branches at a same stage, and comprising 2N switching elements of a second type (C_{dk,1}, C_{dk,2}) capable of electrically connecting, in parallel, two storage elements belonging respectively to the first and second branches at adjacent stages,
- a selection step consisting of choosing only a portion of the storage elements of the first branch corresponding to a number of stages less than the total number of stages of the battery and of choosing only a portion of the storage elements of the second branch corresponding to a number of stages less than the total number of stages of the battery,
- a step of control of the switching elements so as to electrically connect to one another, in parallel, the selected storage elements of the first branch and the selected storage elements of the second branch.

2. Method according to Claim 1, **characterized in that** during the control step only a portion of the switching elements of the first type and only a portion of the switching elements of the second type change state.

3. Method according to either one of Claims 1 and 2, **characterized in that** during a phase of discharging of the battery, the selection step comprises a step of determination of at least one storage element of the battery at the terminals of which the electric voltage is lower than the voltage of the other storage elements by a predetermined threshold, the storage elements selected in the selection step including said at least one storage element determined in the determination step.

4. Method according to any one of Claims 1 to 3, **characterized in that** during a phase of charging of the battery, the selection step comprises a step of identification of at least one storage element of the battery at the terminals of which the electric voltage is greater than the voltage of the other storage elements by a predetermined threshold, the storage elements selected in the selection step including said at least one storage element identified in the identification step.

5. Method according to any one of Claims 1 to 4, **characterized in that** the number of stages and the choice of stages selected from the first branch and the number of stages and the choice of stages selected from the second branch are dependent on selection criteria taking into account a sought balancing dynamic of the electric voltages at the terminals of the storage elements electrically connected in parallel following the control step and/or a maximum value of the strength of the electric current circulating in said storage elements.

6. Method according to any one of Claims 1 to 5, **characterized in that**, during the selection step, the number of storage elements selected from the first branch and the number of storage elements selected from the second branch are different, so that the control step electrically connects, in parallel, a different number of stages from the first branch and from the second branch.

7. Method according to either one of Claims 3 and 6, **characterized in that** the selection step comprises a step of identification, from the branch not including said at least one storage element determined in the determination step, of a number of storage elements greater than the number of storage elements determined in the determination step and having states of charge greater than that of said at least one storage element determined in the determination step, then a step of estimation of the electric balancing current circulating in said at least one storage element determined in the determination step after implementation of said control step.

8. Method according to Claim 7, **characterized in that** the selection step comprises a step of estimation of the period of time necessary for the electrical recharging of said at least one storage element determined in the determination step after implementation of said control step.

9. Method according to either one of Claims 7 and 8, **characterized in that** the selection step comprises a step of estimation of the difference in potential necessary for the electrical recharging of said at least one storage element determined in the determination step, in particular on the basis of the knowledge of the resistances of the components of the balancing device, the number and the stages of the storage elements selected in the selection step from the branch not containing said at least one storage element determined in the determination step then being selected on the basis of said difference in potential and in a manner making it possible to generate said electric balancing current after implementation of said control step.

10. Method according to any one of Claims 1 to 9, **characterized in that** it comprises:
- a step of control solely of all the switching elements of the first type (Cₚₖ) during a first period so that the two storage elements belonging respectively to the first and second branches at a same stage are electrically connected to one another in parallel, this being the case for each stage of the battery,
- and/or a step of control solely of a first half of the switching elements of the second type (C_{dk,1}) during a second period so that the storage elements of the first branch are each electrically connected in parallel to the storage element of the second branch at the adjacent and lower stage,
- and/or a step of control solely of a second half of the switching elements of the second type (C_{dk,2}) during a third period so that the storage elements of the first branch are each electrically connected in parallel to the storage element of the second branch at the adjacent and upper stage.

11. Device for managing an electrical energy storage battery comprising first and second branches electrically connected in parallel and each having N storage elements (E_{i,j}) electrically connected in series, said device comprising a non-dissipative balancing device for balancing the electrical voltages at the terminals of the storage elements of the battery, said device comprising N+1 switching elements of a first type (C_{p,k}) capable of electrically connecting, in parallel, two storage elements belonging respectively to the first and second branches at a same stage, and comprising 2N switching elements of a second type (C_{dk,1}, C_{dk,2}) capable of electrically connecting, in parallel, two storage elements belonging respectively to the first and second branches at adjacent stages, and a control unit individually controlling the switching elements of the first and second type in order to carry out the method according to any one of the preceding claims.
